# EUROPÄISCHE PATENTSCHRIFT

(11) **EP 2 607 768 B1**
(45) Veröffentlichungstag und Bekanntmachung des Hinweises auf die Patenterteilung: **01.10.2014**
(21) Anmeldenummer: 11194533.3
(22) Anmeldetag: 20.12.2011
(51) Int. Cl.: F16L 33/207, F16L 13/14

(54) **Rohrklemme**
Tube clamp
Serre-joint

(43) Veröffentlichungstag der Anmeldung: 26.06.2013
(73) Patentinhaber: Geberit International AG, 8645 Jona (CH)
(72) Erfinder: Huber, René, 8645 Jona (CH); Baggenstos, Roger, 8645 Jona (CH); Lippuner, Marc, 8645 Jona (CH)
(74) Vertreter: Frischknecht, Harry Ralph

(56) Entgegenhaltungen:
- EP-A1- 1 596 116
- EP-A1- 1 790 896
- WO-A1-94/24475

## Beschreibung

### TECHNISCHES GEBIET

Die vorliegende Erfindung betrifft eine Rohrklemme oder ein Fitting oder eine Armatur mit einem Kontrollmittel nach dem Oberbegriff von Anspruch 1.

### STAND DER TECHNIK

Die EP 1 790 896 und die EP 1 596 116 zeigen Pressfittings mit Kontrollelementen. Allerdings weisen diese Kontrollelemente den Nachteil auf, dass diese die Pressung nachteilig beeinflussen.

Aus der EP 1 477 719 ist ein Fitting oder eine Armatur bekannt, welche einen Kontrollkörper aufweist. Der Kontrollkörper wird bei der Verpressung der Presshülse durch den Vorgang der Verpressung abgeschert bzw. von der Armatur entfernt. Nach erfolgter Verpressung kann bei Fehlen des Kontrollkörpers erkannt werden, dass die Verpressung entsprechend ausgeführt wurde.

Bei der praktischen Umsetzung der technischen Lehre nach EP 1 477 719 wurden sehr gute Resultate erzielt. Insbesondere waren die Installateure mit der visuellen Anzeige sehr zufrieden.

Allerdings hat es sich in der Praxis auch gezeigt, dass die bei der Verpressung wegfallenden Teile in das Presswerkzeug eindringen können, was zu einem Verklemmen des Werkzeugs führt. Zudem haben Fehlmanipulationen seitens der Installateure dazu geführt, dass der Kontrollkörper ohne das Vorliegen einer Verpressung entfernt wurde. Beispielsweise im Falle einer noch nicht vollständigen Verpressung. Dadurch kann die Verbindung nicht mit der nötigen Sicherheit geprüft werden.

### DARSTELLUNG DER ERFINDUNG

Ausgehend von diesem Stand der Technik liegt der Erfindung eine Aufgabe zugrunde, eine Rohrklemme anzugeben, welche verbesserte Kontrolleigenschaften aufweist wobei die Pressung nicht negativ vom Kontrollelement beeinflusst wird.

Eine solche Aufgabe löst die Rohrklemme nach Anspruch 1. Demgemäss umfasst eine Rohrklemme zum Verbinden eines Rohres ein in ein Ende des Rohres einsteckbares Anschlussstück, einen Klemmring, der von einem Werkzeug zusammenpressbar ist und ein Kontrollelement zur Überprüfung der Verpressung. Das Kontrollelement ist durch den Vorgang des Verpressens des Klemmringes von einer ersten Position in eine zweite die Verpressung anzeigende Position verschiebbar, wobei das Kontrollelement an der Rohrklemme bewegbar gelagert ist und sowohl in der ersten Position als auch in der zweiten Position das Kontrollelement mit der Rohrklemme in Verbindung steht.

Die Lagerung des Kontrollelementes an der Rohrklemme hat den Vorteil, dass das Kontrollelement oder Indikator eine aktive Anzeige erlaubt, wobei der Benutzer das Kontrollelement in der zweiten Position, welche die Verpressung anzeigt, erkennen kann. Die Unsicherheit gegenüber Lösungen aus dem Stand der Technik entfällt somit aufgrund der aktiven Anzeige.

Vorzugsweise ist das Kontrollelement derart ausgebildet, dass es in der ersten Position von ausserhalb der Rohrklemme im Wesentlichen nicht einsehbar oder nicht einsehbar ist, und dass das Kontrollelement in der zweiten die Verpressung anzeigende Position von ausserhalb der Rohrklemme visuell wahrnehmbar oder sichtbar ist. Somit wird die Sicherheit der Erkennung weiter verbessert.

Vorzugsweise ist das Kontrollelement am Klemmring anliegend und bei der besagten Verpressung des Klemmrings von der ersten Position in die zweite Position verschiebbar. Alternativ kann der Klemmring bei der Verpressung mit dem Kontrollelement in Kontakt kommen. Vorzugsweise steht aber das Kontrollelement im direkten und insbesondere im unmittelbaren Kontakt mit dem Klemmring, so dass keine weiteren bewegbaren Teile vorzusehen sind.

Der Klemmring weist einen ringförmigen Abschnitt und einen durch besagtes Werkzeug zusammenpressbaren Pressabschnitt mit zwei zusammenpressbaren Seitenwänden auf. Das Kontrollelement ragt mit einem Antriebsabschnitt in den Zwischenraum zwischen die beiden Seitenwände ein, wobei durch das Zusammenpressen die Seitenwände aufeinander zu bewegt werden und eine Kraft auf den Antriebsabschnitt des Kontrollelements resultiert, so dass das Kontrollelement von der ersten Position in die zweite Position verschoben wird. Hierdurch kann mit einem einfachen Mittel die Bewegung bei der Verpressung bereitgestellt werden.

Vorzugsweise weist der Antriebsabschnitt des Kontrollelementes mindestens eine bezüglich der Richtung der Bewegung des Kontrollelementes von der ersten Position in die zweite Position abgeschrägte oder geneigte Antriebsfläche auf, wobei die mindestens eine Antriebsfläche mit der besagten Seitenwand des Klemmrings in Kontakt steht. Besonders bevorzugt weist die Antriebsfläche zwei geneigte in eine Spitze verlaufende Antriebsflächen auf, wobei die Spitze dann zwischen die Seitenwände einragt und bei der Verpressung aus den Seitenwänden hinaus bewegt wird.

Die Seitenwände werden bevorzugt in jeweils einer Richtung senkrecht zur Mittelachse der Rohrklemme aufeinander zu bewegt und die mindestens eine Antriebsfläche ist dabei geneigt zur besagten Richtung der Bewegung der Seitenwände orientiert, wobei aufgrund dieser Neigung der Antriebsflächen das Kontrollelement im Wesentlichen entlang der Mittelachse, also axial zur Rohrklemme, verschoben wird.

Vorzugweise weist die Rohrklemme eine Mantelfläche auf, wobei das Kontrollelement auf der besagten Mantelfläche gelagert ist und in Richtung des Anschlussstückes von der besagten ersten Position in die besagte zweite Position verschiebbar ist. Durch die Lagerung an der Mantelfläche kann eine besonders einfache Struktur geschaffen werden.

Vorzugsweise umfasst die Rohrklemme ein Gehäuse, wobei das Kontrollelement in der ersten Lage vorzugweise vollständig im Inneren des Gehäuses gelagert ist und bei der Bewegung in die zweite Lage aus dem Gehäuse hinaus bewegt wird. Alternativ ist das Kontrollelement in einem dem Gehäuse angeformten Aufnahmeraum gelagert, wobei das Kontrollelement in der ersten Lage vorzugsweise vollständig im Inneren des Aufnahmeraums gelagert ist und bei der Bewegung in die zweite Lage aus dem Aufnahmeraum hinaus bewegt wird.

Bevorzugterweise unterscheidet sich Kontrollelement farblich von den anderen Teilen der Rohrklemme, insbesondere vom Gehäuse.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Ausführungsform einer erfindungsgemässen Rohrklemme im unverpressten Zustand;
- Fig. 2: eine perspektivische Ansicht der Ausführungsform nach Figur 1 im verpressten Zustand;
- Fig. 3: eine teilweise geschnittene Ansicht der Rohrklemme nach Figur 1;
- Fig. 4: eine teilweise geschnittene Ansicht der Rohrklemme nach Figur 2; und
- Fig. 5: eine perspektivische Ansicht des Kontrollelementes von oben;
- Fig. 6: eine perspektivische Ansicht des Kontrollelementes von unten; und
- Fig. 7: eine Schnittdarstellung durch die Rohrklemme entlang der Mittelachse.

### BESCHREIBUNG BEVORZUGTER AUSFÜHRUNGSFORMEN

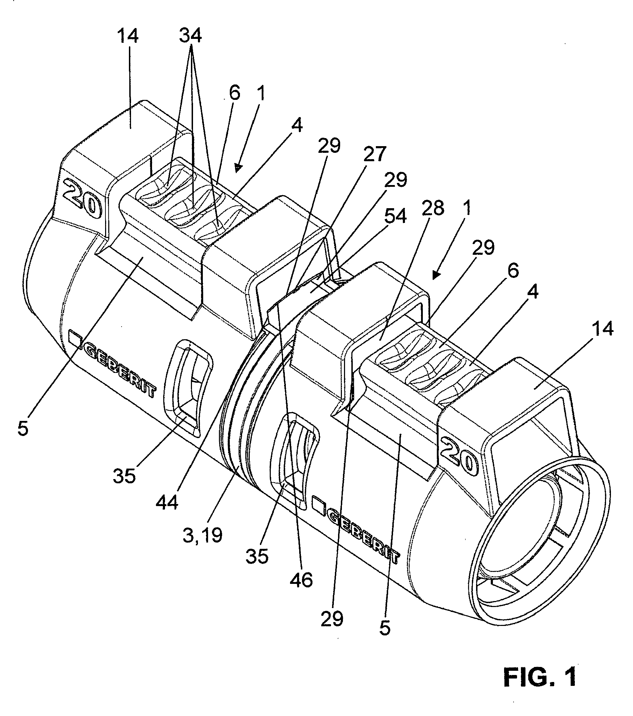

In der Figur 1 wird eine perspektivische Ansicht einer Rohrklemmanordnung mit zwei erfindungsgemässen Rohrklemmen 1 nach einer Ausführungsform im unverpressten Zustand gezeigt. Die beiden Rohrklemmen 1 dienen der Verbindung von zwei hier nicht dargestellten Rohren, welche im Wesentlichen kollinear verlaufen. Die beiden Rohrklemmen 1 der Rohrklemmenanordnung stehen hier über ein Anschlussstück 3 miteinander in Verbindung, wobei die zu verbindenden Rohre mit dem Anschlussstück 3 in Kontakt kommen.

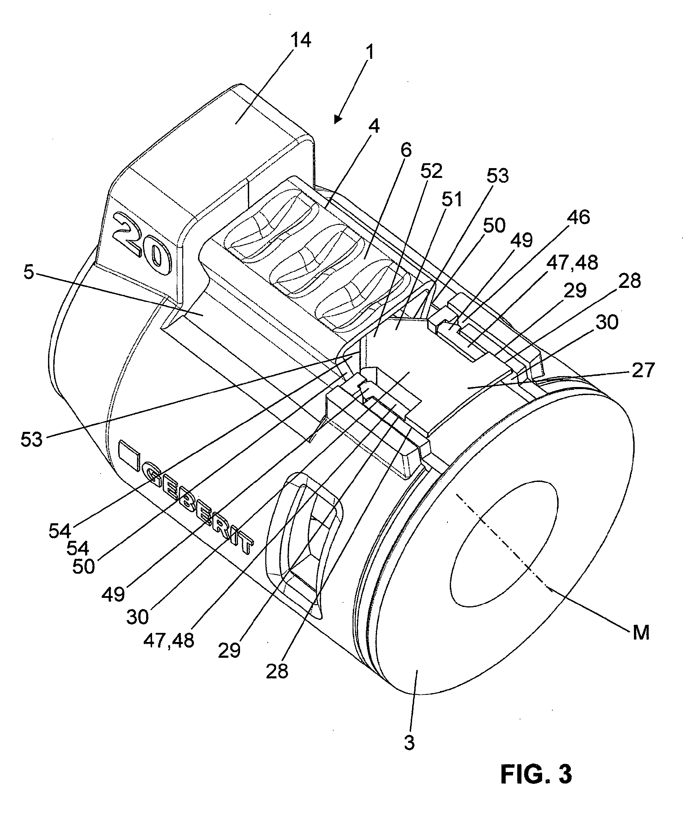

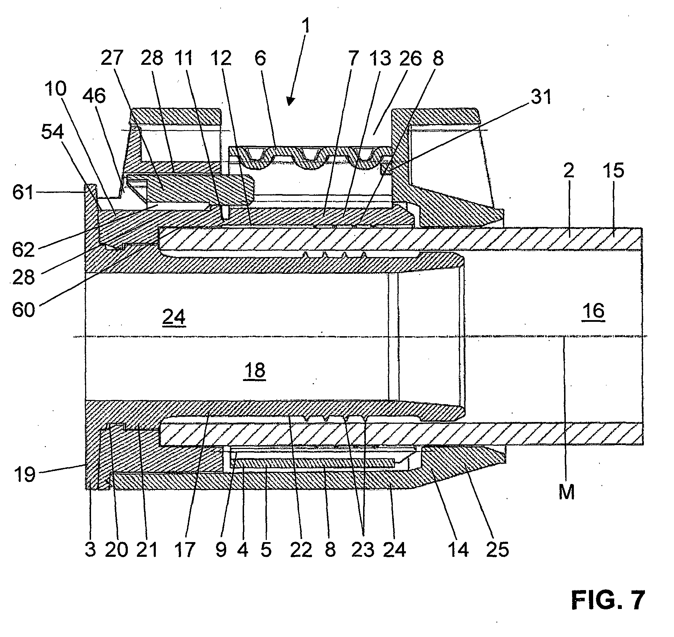

Eine mögliche und beispielhafte Ausführungsform der Rohrklemme wird unten mit Bezug zur Figur 7 im Detail erläutert. Die Rohrklemme 1 dient zum Verbinden eines Rohres 2 mit einem in ein Ende des Rohres 2 einsteckbaren Anschlussstückes 3. Dabei umfasst die Rohrklemme im Wesentlichen ein Anschlussstück 3, einen Klemmring 4, der von einem Werkzeug zusammenpressbar ist und ein Kontrollelement 27 zur Überprüfung der Verpressung. Das Anschlussstück 3 ist in den Figuren 3, 4 und 7 nur hälftig gezeigt. Der Klemmring 4 stellt dabei eine Klemmkraft auf den Umfang des Rohrs 2 und das Anschlussstück 3 bereit. Das Kontrollelement 27 ist vorzugsweise am Klemmring 4 angelehnt bzw. steht mit dem Klemmring 4 in Kontakt. Weiter kann die Rohrklemme 1 zusätzlich ein Gehäuse 14 umfassen, wobei das Gehäuse 14 der Aufnahme des Kontrollelementes 27 dienen kann.

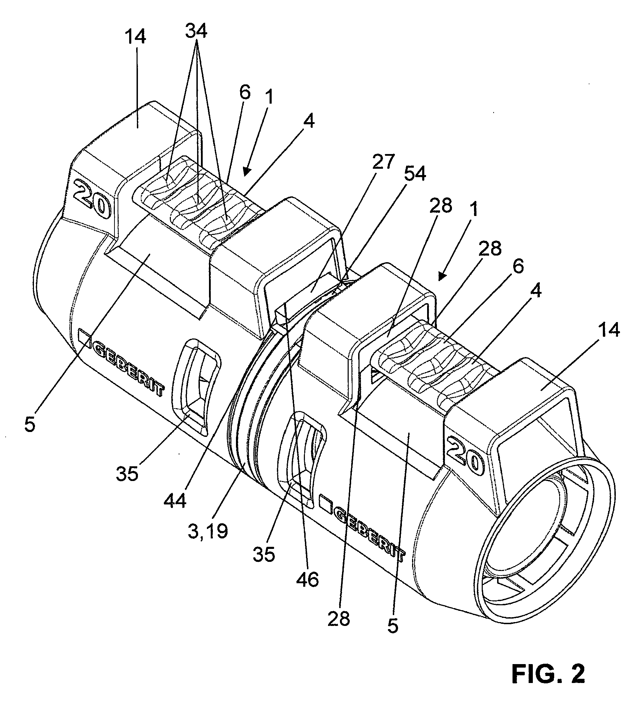

Das Kontrollelement 27 ist durch den Vorgang des Verpressens des Klemmringes von einer ersten Position, wie in der Figur 1 gezeigt, in eine zweite die Verpressung anzeigende Position, wie in der Figur 2 gezeigt, verschiebbar. Die Verschiebung erfolgt vorzugsweise parallel zur Mittelachse M der Rohrklemme 1. In der Figur 2 kann gut erkannt werden, wie das Kontrollelement 27 aus dem Gehäuse 14 hinausragt. Weiter ist das Kontrollelement 27 an der Rohrklemme 1 bewegbar gelagert und sowohl in der ersten Position als auch in der zweiten Position steht das Kontrollelement 27 mit der Rohrklemme 1 in Verbindung. Somit kann dem Installateur nach erfolgter Verpressung aktiv angezeigt werden, dass die Verpressung erfolgte. Es wird somit eine aktive Anzeige dargestellt, was dem Installateur die Gewähr gibt, dass wenn er das Kontrollelement 27 in der zweiten die Verpressung anzeigende Position sieht, auch eine Verpressung erfolgte. Folglich wird hier die Sicherheit der Anzeige gegenüber den aus dem Stand der Technik bekannten und bei der Vepressung verlustig gehenden Kontrollelemente deutlich erhöht.

In der Figur 1 ist die Rohrklemme im unverpressten Zustand, in welchem sich das Kontrollelement 27 in der ersten Position befindet, gezeigt. In der Figur 2 ist die Rohrklemme im verpressten Zustand, in welchem sich das Kontrollelement 27 in der zweiten die Verpressung anzeigende Position befindet, gezeigt. Das Kontrollelement 27 ragt in der zweiten Position aus dem Gehäuse 14 der Rohrklemme 1 hinaus. Das Kontrollelement 27 ist vorzugsweise in der ersten Position von ausserhalb der Rohrklemme 1 im Wesentlichen nicht einsehbar oder nicht einsehbar. Das Kontrollelement 27 ist dann in der zweiten die Verpressung anzeigende Position von ausserhalb der Rohrklemme 1 visuell wahrnehmbar oder sichtbar. Die Unsichtbarkeit in der ersten Position und der damit verbundene Wechsel zur Sichtbarkeit in der zweiten Position hat den Vorteil, dass das Erscheinungsbild der Rohrklemme 1 wesentlich verändert wird, womit die Erkennung der Verpressung weiterhin verbessert wird.

Die Rohrklemme 1 weist vorzugsweise eine Mantelfläche 54 auf, auf welcher das Kontrollelement 27 verschiebbar gelagert ist. Die Mantelfläche 54 kann beispielsweise durch das Gehäuse 14 oder den Spannring 7 oder das Anschlussstück 3 oder durch das Rohr 2 bereitgestellt werden. Das Kontrollelement 27 ist demnach vorzugsweise auf der äusseren Mantelfläche der Rohrklemme 1 bzw. auf einem der genannten Elemente gelagert. Weiter ist das Kontrollelement 27 auf der besagten Mantelfläche 54 von der ersten Position in die zweite die Verpressung anzeigende Position verschiebbar.

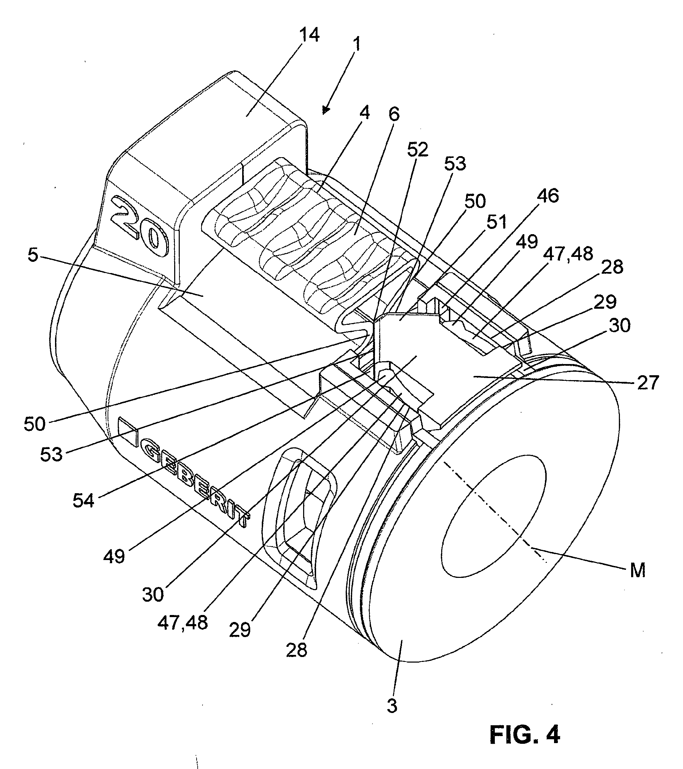

In den Figuren 3 und 4 werden Ansichten mit teilweise geschnittenem Gehäuse 14 im Bereich des Kontrollelementes 27 gezeigt. Das Kontrollelement 27 ist vorzugsweise in einer Führung 28 an der Rohrklemme 1 gelagert und entlang dieser Führung 28 von der ersten Position in die zweite Position verschiebbar. Vorzugsweise verläuft die Führung in Richtung der Mittelachse M des Anschlussstückes 3. Die Führung 28 kann dabei einen Teil der Mantelfläche 54 darstellen, insbesondere aber erstreckt sich die Führung 28 radial von der Mantelfläche 54 und stellt auf der Mantelfläche 54 einen Führungskanal oder Aufnahmeraum 30 für das Kontrollelement 27 bereit.

In der Figur 2 und 3 bzw. 4 kann eine vorzugsweise Führung 28 gut erkannt werden. Die Führung 28 umfasst dabei Führungswände 29, welche das Kontrollelement 27 führen. In der Figur 3 wird der Übersicht halber die obere Führungswand 29 nicht dargestellt. Die Führungswände 29 stellen dabei einen Aufnahmeraum 30 für das Kontrollelement 27 bereit. Das Kontrollelement 27 ist dabei in diesem Aufnahmeraum 30 bewegbar von der ersten in die zweite Position gelagert. In der ersten Position liegt das Kontrollelement 27 vorzugsweise vollständig im Aufnahmeraum 30 und ist so von ausserhalb der Rohrklemme 1 nicht einsehbar und in der zweiten Position ragt das Kontrollelement 27 aus dem Aufnahmeraum 30 hinaus.

Die Anordnung des Kontrollelementes 27 in einem Aufnahmeraum 30 oder im Inneren des Gehäuses 14 in der ersten Position hat den Vorteil, dass das Kontrollelement 27 bezüglich äusserer Einflüsse geschützt ist und so nicht vor Gebrauch durch unsachgemässe Handlung verloren geht.

Unter Bezugnahme zu den Figuren 3 und 4 wird nun eine besonders vorteilhafte Betätigung des Kontrollelementes 27 erläutert. Das Kontrollelement 27 ist hier am Klemmring 4 angelehnt bzw. steht mit dem Klemmring 4 in Verbindung. Bei der besagten Verpressung des Klemmrings 4 ist das Kontrollelement 27 von der ersten Position in die zweite Position verschiebbar ist. Unter der Ausdrucksweise angelehnt wird verstanden, dass sich das Kontrollelement 27 in physischem Kontakt mit dem Klemmring 4 befindet oder dass während der Verpressung des Klemmrings 4 ein physischer Kontakt hergestellt wird. Vorzugsweise steht also das Kontrollelement 27 bereits vor der Verpressung, wenn es sich in der ersten Position befindet, mit dem Kontrollelement 27 in Kontakt. Alternativ besteht in der ersten Position noch kein Kontakt mit dem Klemmring 4, wobei dann während der Verpressung ein entsprechender Kontakt hergestellt wird.

Der Klemmring 4 umfasst einen ringförmigen Abschnitt 5 und einen durch besagtes Werkzeug zusammenpressbaren Pressabschnitt oder Ohr 6 mit zwei zusammenpressbaren Seitenwänden 50. Das Kontrollelement 27 ragt mit einem Antriebsabschnitt 51 in den Zwischenraum 52 zwischen den beiden Seitenwänden 50 ein. Beim Zusammenpressen werden die beiden Seitenwände 50 mit einer Kraft gegeneinander beaufschlagt, so dass die beiden Seitenwände 50 sich aufeinander zu bewegen und dass sich somit der Zwischenraum 52 durch die Verschiebung der Seitenwände 50 aufeinander zu verkleinert. Aufgrund des Kontaktes der Seitenwände 50 mit dem Antriebsabschnitt 51 resultiert beim Zusammenpressen eine Kraft auf das Kontrollelement 27, so dass das Kontrollelement von der ersten Position in die zweite Position verschoben wird.

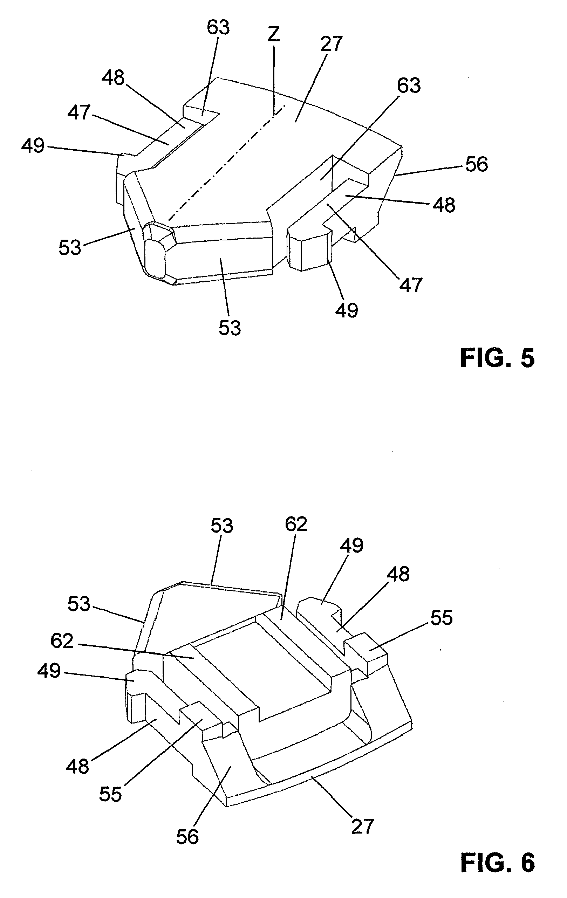

Der Antriebsabschnitt 51 des Kontrollelementes 27 weist mindestens eine Antriebsfläche 53 auf. Die Antriebsfläche 53 ist bezüglich der Richtung der Bewegung des Kontrollelementes 27 von der ersten Position in die zweite Position abgeschrägt ausgebildet und steht mit der besagten sich verformenden Seitenwand 50 in Kontakt. In der vorliegenden Ausführungsform sind zwei Antriebsflächen 53 angeordnet, welche eine Spitze bilden, wobei die Spitze in den Zwischenraum 52 zwischen die beiden Seitenwände 50 einragen. Die beiden Antriebsflächen 53 stehen somit winklig oder geneigt zueinander. Mit Blick auf die Figuren 5 und 6 kann auch gesagt werden, dass Antriebsflächen 53 winklig oder geneigt zur Hauptrichtung Z des Kontrollelementes 27 stehen, wobei die Hauptrichtung Z bei eingebautem Kontrollelement 27 parallel zur Mittelachse M verläuft. Wenn nun die beiden Seitenwände 50 gegeneinander, also in jeweils eine Richtung senkrecht zur Mittelachse M, während des Vorgangs der Verpressung bewegt werden, so resultiert aufgrund der Antriebsfläche 53 eine Bewegung auf das Kontrollelement 27. Die Bewegung der beiden Seitenwände 50 wird somit über die Antriebsflächen 53 aufgrund deren Neigung zur Bewegungsrichtung der beiden Seitenwände 50 auf das Kontrollelement 27 umgelenkt. Das Kontrollelement 27 wird dann von der ersten Position nach der Figur 3 in die zweite Position nach der Figur 4 im Wesentlichen entlang der Mittelachse M bewegt.

Bezüglich der Richtung der Bewegung der Seitenwände 50 während des Vorgangs der Verpressung verläuft die Bewegungsrichtung des Kontrollelementes 51 von der ersten Position in die zweite Position im Wesentlichen rechtwinklig.

Von der Schnittdarstellung der Figur 7, in welcher das Kontrollelement 27 in der ersten Position gezeigt wird, kann gut erkannt werden, dass die Bewegung des Kontrollelementes 27 von der ersten Position in eine Richtung gegen die Richtung von der ersten Position in die zweite Position durch ein erstes Anschlagselement 60 begrenzt ist. Dabei stehen Teile des Kontrollelementes 27, hier der Kamm bzw. die Kämme 62, am Anschlagselement 60 an. Weiter weist das Kontrollelement entsprechende Nocken 55 auf, welche alternativ oder zusätzlich zu den Kämmen 62 als Gegenstück zum Anschlagselement 60 einsetzbar sind. Die Nocken 55 können auch als Montagehilfe dienen.

In der zweiten Position ist das Kontrollelement 27 in seiner Lage ebenfalls blockiert. Die dauerhaft verformten Seitenwände 50 blockieren eine Bewegung von der zweiten Lage in die erste Lage. Weiter wird eine mögliche Bewegung von der zweiten Lage in eine Richtung entgegen der Richtung von der ersten Lage zur zweiten Lage durch ein zweites Anschlagselement 61, hier in der Gestalt des Flanschs 19 des Anschlussstückes 3, blockiert. Folglich wirkt der Flansch 19 auch als Anschlagselement für das Kontrollelement 27 in der zweiten Lage.

In den Figuren 1 bis 4 kann weiterhin erkannt werden, dass das Kontrollelement 27 bevorzugt im Gehäuse 14 gelagert ist. Das Kontrollelement 27 ist dabei in der ersten Lage im Inneren des Gehäuses 14 gelagert. Bevorzugt ist das Kontrollelement 27 in der ersten Position im Wesentlichen vollständig im Inneren des Gehäuses 14 gelagert, so dass das Kontrollelement 27 von aussen im Wesentlichen nicht sichtbar ist. Bei der Bewegung in die zweite Position wird das Kontrollelement 27 dann aus dem Gehäuse 14 hinaus bewegt, so dass das Kontrollelement 27 von aussen erkennbar wird.

Hier in der vorliegenden Ausführungsform ist das Kontrollelement 27 in einem dem Gehäuse 14 angeformten Aufnahmeraum 30 gelagert. In der ersten Position befindet sich das Kontrollelement 27 im Wesentlichen vollständig im Aufnahmeraum 30 und wird dann beim Vorgang der Verpressung aus dem Aufnahmeraum 30 hinaus in die zweite Position bewegt, so dass das Kontrollelement 27 dann von ausserhalb des Gehäuses 14 erkennbar wird.

Das Kontrollelement 27 unterscheidet sich vorzugweise farblich von den anderen Teilen der Rohrklemme 1, insbesondere vom Gehäuse 14. Besonders bevorzugt ist dabei eine Farbwahl mit einem grossen Kontrast, so dass der Installateur die Lage des Kontrollelementes 27 und somit die Verpressung zweifelsohne erkennen kann.

In den Figuren 4 bis 6 kann weiter erkannt werden, dass das Kontrollelement 27 vorzugsweise Rastmittel 47 umfasst. Die Rastmittel 47 stellen hier in der ersten Position eine Rastverbindung mit der Rohrklemme 1 bereit. Die Rohrklemme 1 weist hierfür entsprechend Rastausnehmungen 46 auf. Die Rastausnehmungen 46 ragen hier in zwei der Führungswände 29 ein und sind bezüglich des Führungsraumes gegenüberliegend voneinander angeordnet sind. Die Rastmittel 47 haben in der vorliegenden Ausführungsform die Gestalt von sich seitlich zum Kontrollelement 27 erstreckenden Federlaschen 48 mit entsprechend den Federlaschen 48 angeformten Rastnasen 49. Kontrollelement 27 und Rastmittel 47 sind vorzugsweise einstückig ausgebildet. Durch die Rastmittel 47 wird verhindert, dass sich des Kontrollelement 27 selbsttätig aus der ersten Position in die zweite Position verschieben kann. Insofern stellen die Rastmittel 47 ebenfalls ein Art Anschlagselement bereit. Bei der Verpressung des Klemmrings 4 wird die Rastverbindung aufgrund der über die Antriebsflächen 53 auf das Kontrollelement 27 wirkenden Kräften entsprechend aufgehoben.

Nach einer weiteren Ausgestaltung kann das Rastmittel 47 auch in der zweiten Position mit der Rohrklemme 1 eine Rastverbindung bereitstellen. In der vorliegenden Ausführungsform stellen die Rastmittel in der zweiten Position eine kraftschlüssige Verbindung bereit, indem eine Kraft von den Rastmitteln auf die Führungswände 30 wirkt.

Die Figuren 5 und 6 zeigen perspektivische Ansicht einer möglichen Ausführungsform des Kontrollelementes 27. In der Figur 5 kann die Ausbildung der Rastmittel 47 gut erkannt werden. Die Rastmittel 47 erstrecken sich dabei mit der Federlasche 48 in einer Ausnehmung 63 entlang des Kontrollelementes 27. Hier sind zwei Rastmittel 47 seitlich zum Kontrollelement 27 angeordnet. Am vorderen freien Ende 64 weisen die Rastmittel 47 jeweils eine Rastnase 49 auf.

Weiter sind in der Figur 5 die Antriebsflächen 53 gut erkennbar. Die Antriebsflächen 53 erstrecken sich dabei geneigt oder winklig zur Hauptachse Z. Die Hauptachse Z ist dabei kollinear zur Bewegungsrichtung des Kontrollelementes 27 von der ersten Position in die zweite Position. Über diese Antriebsflächen 53 steht das Kontrollelement 27 mit dem Klemmring 4 in Kontakt bzw. ist das Kontrollelement 27 am Klemmring 4 angelehnt.

In der Figur 6 wird die Unterseite des Kontrollelementes 27 gezeigt, wobei hier die Kämme 62, mit welchen das Kontrollelement 27 auf der Mantelfläche 54 aufliegt gut erkennbar sind. Die Kämme 62 sind beabstandet zueinander angeordnet und erstrecken sich vom Kontrollelement 27 weg. Ebenfalls kann in dieser Ansicht erkannt werden, dass das Kontrollelement 27 abstehende Nocken 55 aufweist. Diese Nocken 55 dienen als Gegenstück für das erste Anschlagselement 60.

Bezüglich der Hauptachse Z gegenüber den Antriebsflächen verläuft das Kontrollelement 27 mit einer Fläche 56, welche derart orientiert ist, dass der Querschnitt des Kontrollelementes 27 entlang der Hauptachse Z kontinuierlich kleiner wird. Mit Blick auf die Figuren 1 und 2 wird die Funktion dieser Fläche 56 klar. Das Kontrollelement 27 soll in der ersten Lage von ausserhalb der Rohrklemme im Wesentlichen nicht einsehbar sein. Durch die Fläche 56 wird die sichtbare Fläche bei perspektivischer Ansicht, wie in den Figuren 1 und 2 gezeigt, verkleinert, wenn sich das Kontrollelement 27 in der ersten Position befindet. Bezüglich der Fläche 56 kann auch gesagt werden, dass die Fläche 56 bezüglich der Betätigungsrichtung von der ersten Position in die zweite Position derart geneigt ist, dass bei feststehendem Betrachtungspunkt der sichtbare Querschnitt des Kontrollelementes senkrecht zur Betätigungsrichtung gesehen bei der Bewegung von der ersten Position in die zweite Position vergrössert wird.

Mit Bezug zur Figur 7 wird die bevorzugte Rohrklemme 1 zum Verbinden eines Rohres 2 mit einem in ein Ende des Rohres 2 einsteckbaren Anschlussstück 3 gemäss der obigen Beschreibung in einer Schnittdarstellung gezeigt.

Das Rohr 2 ist im Wesentlichen zylindrisch ausgebildet und erstreckt sich entlang einer Mittelachse M und kann beispielsweise als Wasserleitung dienen. Das Rohr 2 begrenzt mit einer umlaufenden Seitenwand 15 einen Rohrinnenraum 16.

Das Anschlussstück 3, welches mit dem Rohr 2 verbunden werden soll, ist im Wesentlichen zylindrisch ausgebildet und erstreckt sich entlang einer Mittelachse M. Das Anschlussstück 3 begrenzt mit einer umlaufenden Seitenwand 17 einen Hohlraum 18. Das Anschlussstück 3 weist weiterhin einen Flansch 19 auf, welcher sich von der Seitenwand 17 bezüglich des Hohlraums 18 nach aussen erstreckt. Im Bereich des Flansches 19 ist zudem eine umlaufende Rille 20 und eine umlaufende Erhebung 21, welche dann von einem Lagerungsabschnitt 22 gefolgt wird, angeordnet. Mit dem Lagerungsabschnitt 22 ragt das Anschlussstück 3 in den Rohrinnenraum 16 ein. In diesem Bereich wird durch die Rohrklemme 1 auch eine entsprechende Kraft auf das Anschlussstück 3 übertragen. Der zylindrische Lagerungsabschnitt 22 kann optional umlaufende Erhebungen 23 umfassen.

Das Rohr 2 und das Anschlussstück 3 werden mit einer Rohrklemme 1 miteinander verbunden. Dabei ragt das Anschlussstück 3 mit dem Lagerungsabschnitt 22 in den Rohrinnenraum 16 ein und erstreckt sich soweit in den Rohrinnenraum 16, dass der Lagerungsabschnitt 22 in den Wirkungsbereich der Rohrklemme 1 zu liegen kommt. Die Rohrklemme 1 kann dann gemäss der untenstehenden Beschreibung geklemmt werden, und bringt dabei eine Klemmkraft auf das Rohr 2 und das Anschlussstück 3 auf, so dass das Rohr 2 zum Anschlussstück 3 geklemmt wird. Der maximale Aussendurchmesser des Lagerungsabschnittes 22 ist etwas kleiner oder gleich dem Innendurchmesser des Rohres 2 gewählt.

Die Rohrklemme 1 umfasst in der gezeigten Ausführungsform einen Klemmring 4 und einen durch den Klemmring 4 zusammenpressbaren Spannring 7. Die Rohrklemme 1 umgibt mit Klemmring 4 und Spannring 7 das Rohr 2. Alternativ kann die Rohrklemme 1 auch ohne den Spannring ausgebildet sein, wobei dann der Klemmring 4 direkt auf das Rohr 2 wirken würde.

Der Klemmring 4 weist einen sich entlang seines Umfanges erstreckenden ringförmigen Abschnitt 5 und einen sich von diesem Abschnitt 5 radial nach aussen erstreckender Pressabschnitt 6. Der Pressabschnitt 6 kann auch als Ohr 6 bezeichnet werden. Das Ohr 6 ist mit einem Werkzeug zusammenpressbar wobei sich der Durchmesser des ringförmigen Abschnittes 5 verringert, so dass eine Klemmkraft in radialer Richtung zur Mittelachse M auf das Rohr 2 im Bereich des Lagerungsabschnittes 22 bereitgestellt werden kann.

Der Spannring 7 ragt mit einem Spannabschnitt 8 mindestens teilweise in den ringförmigen Abschnitt 5 des Klemmrings 4 ein. In der vorliegenden Ausführungsform ragt der Spannabschnitt 8 im Wesentlichen vollständig in den ringförmigen Abschnitt 5 ein. Weiter kann der Spannabschnitt 8 auch durch den ringförmigen Abschnitt 5 hindurch, so dass sich der Spannring 7 bezüglich des ringförmigen Abschnittes 5 und der Mittelachse M auf beiden Seiten aus dem ringförmigen Abschnitt 5 erstreckt.

Der Spannabschnitt 8 liegt zwischen dem ringförmigen Abschnitt 5 des Klemmrings 4 und dem Rohr 2. Der Spannabschnitt 8 beziehungsweise der Spannring 7 ist mit einem Innenraum 12 dabei so ausgebildet, dass diese das Rohr 2 im Wesentlichen vollständig umgeben. Der Spannabschnitt 8 verfügt zudem über mindestens einen Schlitz 9, welcher die Wandung des Spannabschnittes von aussen zum Innenraum 12 hin durchbricht. Wenn nun der Klemmring 4 über das Ohr 6 zusammengepresst wird, wird eine Kraft vom Spannring 7 auf den Spannabschnitt 8 des Spannrings 7 übertragen. Dabei wird der Spannabschnitt 8 entsprechend gegen das Rohr 2 gedrückt, wobei die lichte Weite des Schlitzes 9 während des Vorgangs des Zusammenpressens mit zunehmender Kraft bzw. Verformung des Ohrs 6 verkleinert wird. Die lichte Weite des Schlitzes 9 ist dabei so gewählt, dass diese im zusammengepressten Zustand annähernd oder ganz aufgehoben wird. Das heisst, dass die lichte Weite des Schlitzes 9 bei Erreichen einer vorbestimmten Zusammenpresskraft annähernd oder ganz aufgehoben wird. Folglich werden die beiden Seiten des Spannabschnittes im Bereich der Schlitze 9 auf Block gefahren und der Schlitz 9 wird im zusammengepressten Zustand nahezu, insbesondere vollständig, aufgehoben. Dies hat den Vorteil, dass der Spannabschnitt 8 das Rohr 2 um dessen Umfang im Bereich der Klemmung vollständig umgibt, wodurch eine unerwünschte Verformung des Rohres vermieden wird. Zudem kann, falls das Rohr mit einer Kunststoffbeschichtung versehen ist ein Fliessen des Kunststoffes in allfällige Lücken der Rohrklemme 1, insbesondere in den Bereich des Ohrs 6, vermieden werden.

Der Spannring 7 weist weiterhin einen Halterungsabschnitt 10 auf, welcher über einen Verbindungsabschnitt 11 mit dem Spannabschnitt 8 in Verbindung steht. Dies kann gut in der Figur 7 erkannt werden. Halterungsabschnitt 10, Verbindungsabschnitt 11 und Spannabschnitt 8 sind dabei einstückig miteinander verbunden und definieren den zylindrischen Innenraum 12, welcher das Rohr 2 aufnehmen kann.

Der Verbindungsabschnitt 11 ist hier zwischen dem Halterungsabschnitt 10 und dem Spannabschnitt 8 angeordnet. Der Verbindungsabschnitt 11 ist dabei vorzugsweise so ausgebildet, dass dieser während dem Vorgang des Zusammenpressens ein Abscheren des Spannabschnittes 8 vom Halterungsabschnitt 10 zulässt. Folglich wird beim Vorgang des Zusammenpressens des Ohrs 6 der Spannabschnitt 8 vom Halterungsabschnitt 10 abgeschert und die Teile des Spannabschnittes 8 werden entlang einer radialen Bewegung zur Mittelachse M zur Seitenwand 15 des Rohrs 2 bewegt. Der Verbindungsabschnitt 11 kann auch als Sollbruchstelle oder Filmscharnier bezeichnet werden. Durch diesen Abschervorgang, also dem Bruch des Verbindungsabschnittes bzw. der Sollbruchstelle, wird sichergestellt, dass die Elemente des Spannabschnittes 8 parallel über ihre ganze Länge entlang der Mittelachse M gesehen mit der Seitenwand 15 des Rohrs 2 in Kontakt stehen. Daher wird die Klemmkraft über die ganze Auflagefläche des Spannabschnittes gleichmässig verteilt und eine elliptische Verformung des Rohrs kann ausgeschlossen werden.

Der mindestens eine Schlitz 9 erstreckt sich in der vorliegenden Ausführungsform entlang der Mittelachse M des Spannrings 7. Das heisst, dass der mindestens eine Schlitz 9 parallel zur Mittelachse M verläuft. Der mindestens eine Schlitz 9 trennt den Spannring 7 in mindestens eine, vorzugsweise mehrere, Spannlaschen 13 auf.

In der Figur 7 kann ebenfalls gut erkannt werden, dass der Spannring 7 separat vom Klemmring 4 ausgebildet ist. Der Spannring 7 ragt dabei durch den ringförmigen Abschnitt 5 des Klemmrings 4 hinein.

Die Rohrklemme nach der Figur 7 kann durch Spannring 7 und Klemmring 4 oder durch Spannring 7, Klemmring 4 und Gehäuse 14 bereitgestellt werden. Das Gehäuse 14 umfasst einen Gehäuseinnenraum 24, welcher durch eine Wandung 25 begrenzt wird. In der Wandung 25 ist eine Öffnung 26 vorgesehen, durch welche das Ohr bzw. der Klemmabschnitt 6 hindurchragt, so dass dieses von Ausserhalb des Gehäuses 12 mit dem Werkzeug zugänglich ist.

Spannring 7 und Klemmring 4 werden bezüglich einer Drehung um die Mittelachse M im Gehäuse 14 ausgerichtet. Es kann also gesagt werden, dass über das Gehäuse 14 der Klemmring 4 und der Spannring 7 zueinander ausgerichtet werden. Vorzugsweise ist die Ausrichtung dergestalt, dass im Bereich des Ohrs 6, wo der ringförmige Abschnitt 5 unterbrochen wird, eine Spannlasche 13 und nicht ein Schlitz 9 zu liegen kommt. Folglich sind die Schlitze 9 im Bereich des ringförmigen Abschnittes 5 angeordnet. Hierfür weist der Spannring 7 Orientierungsflächen auf, welche an bzw. zu entsprechenden Orientierungsflächen am Gehäuse ausrichtbar sind.

Für die Ausrichtung des Klemmrings 4 umfasst das Gehäuse 14 eine Ausrichtlasche 31, welche sich in die Öffnung 26 erstreckt. Die Ausrichtlasche 31 ist dabei so ausgebildet, dass sich diese in das Ohr 6 des Klemmrings 4 hineinerstreckt. Der Klemmring 4 weist im Bereich des Ohrs 6 mehrere Sicken 34 auf, welche die Stabilität des Ohrs 6 in diesem Bereich erhöhen.

Alternativ können auch der Klemmring 4 und/oder der Spannring 7 mit entsprechenden Mitteln ausgebildet sein, so dass der Klemmring 4 direkt zum Spannring 7 ausgerichtet wird. Dies ist vorteilhaft, wenn die Rohrklemme 1 ohne das Gehäuse 14 bereitgestellt wird.

In der Figur 7 kann die Abfolge der verschiedenen Teile der Rohrklemme 1, des Rohrs 2 und des Anschlussstückes 3 gut erkannt werden. Das Anschlussstück 3 ragt in den Rohrinnenraum 16 ein und wird vom Rohr 2 umgeben. Das Rohr 2 selbst wird durch den Spannring 7 umgeben und der Spannring 7 liegt im ringförmigen Abschnitt 5 des Klemmrings 4, welcher seinerseits im Gehäuseinnenraum 24 des Gehäuses 14 liegt.

Weiter kann das Gehäuse 14 noch ein optionales Sichtfenster 35 aufweisen, wodurch der Installateur erkennen kann, ob das Rohr korrekt in den Innenraum bewegt wurde.

Die hierin beschrieben Rohrklemme ist dimensionsunabhängig. Vorzugsweise wird die Rohrklemme zum Klemmen von Rohren mit Nenndurchmessern im Bereich von 12 mm bis 108 mm eingesetzt. Der Einsatz bei grösseren oder kleineren Rohren wäre auch denkbar.

**BEZUGSZEICHENLISTE**

| | | | |
|---|---|---|---|
| 1 | Rohrklemme | 25 | Wandung |
| 2 | Rohr | 26 | Öffnung |
| 3 | Anschlussstück | 27 | Kontrollelement |
| 4 | Klemmring | 28 | Führung |
| 5 | ringförmiger Abschnitt | 29 | Führungswände |
| 6 | Ohr, Klemmabschnitt | 30 | Aufnahmeraum |
| 7 | Spannring | 31 | Ausrichtlasche |
| 8 | Spannabschnitt | 34 | Sicke |
| 9 | Schlitz | 35 | Sichtfenster |
| 10 | Halterungsabschnitt | 46 | Rastöffnungen |
| 11 | Verbindungsabschnitt | 47 | Rastmittel |
| 12 | Innenraum | 48 | Federlasche |
| 13 | Spannlasche | 49 | Rastnase |
| 14 | Gehäuse | 50 | Seitenwand |
| 15 | Seitenwand | 51 | Antriebsabschnitt |
| 16 | Rohrinnenraum | 52 | Zwischenraum |
| 17 | Seitenwand | 53 | Antriebsfläche |
| 18 | Hohlraum | 54 | Mantelfläche |
| 19 | Flansch | 55 | Nocken |
| 20 | Rille | 56 | Fläche |
| 21 | Erhebung | 60 | Anschlagselement |
| 22 | Lagerungsabschnitt | 61 | Anschlagselement |
| 23 | Erhebung | 62 | Kamm |
| 24 | Gehäuseinnenraum | 63 | Ausnehmung |

## Patentansprüche

1. Rohrklemme (1) zum Verbinden eines Rohres (2) mit einem in ein Ende des Rohres (2) einsteckbaren Anschlussstück (3), mit einem Klemmring (4), der von einem Werkzeug zusammenpressbar ist und mit einem Kontrollelement (27) zur Überprüfung der Verpressung, wobei, dass das Kontrollelement (27) durch den Vorgang des Verpressens des Klemmringes (4) von einer ersten Position in eine zweite die Verpressung anzeigende Position verschiebbar ist, und wobei das Kontrollelement (27) an der Rohrklemme (1) bewegbar gelagert ist und sowohl in der ersten Position als auch in der zweiten Position das Kontrollelement mit der Rohrklemme (1) in Verbindung steht, **dadurch gekennzeichnet, dass** der Klemmring (4) einen ringförmigen Abschnitt (5) und einen durch besagtes Werkzeug zusammenpressbaren Pressabschnitt (6) mit zwei zusammenpressbaren Seitenwänden (50) umfasst, und dass das Kontrollelement mit einem Antriebsabschnitt (52) in den Zwischenraum (51) zwischen die beiden Seitenwände (50) einragt, wobei durch das Zusammenpressen die Seitenwände (50) aufeinander zu bewegt werden und eine Kraft auf den Antriebsabschnitt (52) des Kontrollelements (27) resultiert, so dass das Kontrollelement (27) von der ersten Position in die zweite Position verschoben wird.

2. Rohrklemme (1) nach Anspruch 1, **dadurch gekennzeichnet, dass** das Kontrollelement (27) in der ersten Position von ausserhalb der Rohrklemme (1) im Wesentlichen nicht einsehbar oder nicht einsehbar ist, und dass das Kontrollelement (27) in der zweiten die Verpressung anzeigende Position von ausserhalb der Rohrklemme (1) visuell wahrnehmbar oder sichtbar ist.

3. Rohrklemme nach einem der vorhergehenden Ansprüche, **dadurch gekennzeichnet, dass** das Kontrollelement (27) vorzugsweise direkt am Klemmring (4) anliegend ist und bei der besagten Verpressung des Klemmrings (4) von der ersten Position in die zweite Position verschiebbar ist oder dass das Kontrollelement (27) während der Verformung des Klemmrings (4) mit dem Klemmring (4) in Kontakt kommt und so von der ersten Position in die zweite Position verschiebbar ist.

4. Rohrklemme nach einem der vorhergehenden Ansprüchen, **dadurch gekennzeichnet, dass** der Antriebsabschnitt (52) des Kontrollelementes (27) mindestens eine bezüglich der Richtung der Bewegung des Kontrollelementes (27) von der ersten Position in die zweite Position abgeschrägte Antriebsfläche (53) aufweist, wobei die mindestens eine Antriebsfläche (53) mit der besagten Seitenwand (50) in Kontakt steht.

5. Rohrklemme nach einem der vorhergehenden Ansprüchen, **dadurch gekennzeichnet, dass** die Seitenwände (50) in jeweils einer Richtung senkrecht zur Mittelachse (M) der Rohrklemme (1) aufeinander zu bewegt werden, und dass die Antriebsfläche (53) geneigt zur besagten Richtung orientiert sind, wobei aufgrund dieser Neigung der Antriebsflächen (53) das Kontrollelement (27) im Wesentlichen entlang der Mittelachse (M) verschoben wird.

6. Rohrklemme (1) nach einem der vorhergehenden Ansprüche, **dadurch gekennzeichnet, dass** die Rohrklemme (1) eine Mantelfläche (54) aufweist, wobei das Kontrollelement (27) auf der besagten Mantelfläche (54) gelagert ist und in Richtung des Anschlussstückes (3) von der besagten ersten Position in die besagte zweite Position verschiebbar ist.

7. Rohrklemme nach einem der vorhergehenden Ansprüche, **dadurch gekennzeichnet, dass** das Kontrollelement (27) in einer Führung (28) an der Rohrklemme (1) gelagert ist, wobei das Kontrollelement (27) entlang dieser Führung (28) von der ersten in die zweite Position verschiebbar ist.

8. Rohrklemme nach Anspruch 7, **dadurch gekennzeichnet, dass** die Führung (28) durch einen Aufnahmeraum (30), der durch Führungswände (29) definiert ist, bereitgestellt wird, wobei die Führungswände (29) sich bevorzugt von der Mantelfläche (54) erstrecken.

9. Rohrklemme nach einem der vorhergehenden Ansprüche, **dadurch gekennzeichnet, dass** das Kontrollelement (27) Rastmittel (47) umfasst, wobei die Rastmittel (47) in der ersten Position und/oder in der zweiten Position mit der Rohrklemme (1) eine Rastverbindung bereitstellen.

10. Rohrklemme nach einem der vorhergehenden Ansprüche, **dadurch gekennzeichnet, dass** die Bewegung des Kontrollelementes (27) von der ersten Position in eine Richtung gegen die Richtung von der ersten Position in die zweite Position durch ein erstes Anschlagselement (60) begrenzt ist, und/oder dass die Bewegung des Kontrollelementes (27) von der zweiten Position in eine Richtung gegen die Richtung von der zweiten Position in die erste Position durch ein zweites Anschlagselement (61) begrenzt ist.

11. Rohrklemme nach einem der vorhergehenden Ansprüche, **dadurch gekennzeichnet, dass** die Rohrklemme (1) ein Gehäuse (14) umfasst, wobei das Kontrollelement (27) in der ersten Lage vorzugweise vollständig im Inneren des Gehäuses (14) gelagert ist und bei der Bewegung in die zweite Lage aus dem Gehäuse (14) hinaus bewegt wird, oder wobei das Kontrollelement (27) in einem dem Gehäuse (14) angeformten Aufnahmeraum (29) gelagert ist, wobei das Kontrollelement (27) in der ersten Lage vorzugsweise vollständig im Inneren des Aufnahmeraums (14) gelagert ist und bei der Bewegung in die zweite Lage aus dem Aufnahmeraum (29) hinaus bewegt wird.

12. Rohrklemme nach einem der vorhergehenden Ansprüche, **dadurch gekennzeichnet, dass** das Kontrollelement (27) sich farblich von den anderen Teilen der Rohrklemme (1), insbesondere vom Gehäuse (14), unterscheidet.

13. Rohrklemme nach einem der vorhergehenden Ansprüche, **dadurch gekennzeichnet, dass** die Rohrklemme (1) weiter ein durch den Klemmring (4) zusammenpressbarer Spannring (7) umfasst, welcher mit einem Spannabschnitt (8) mindestens teilweise in den ringförmigen Abschnitt (5) einragt, und das Rohr (2) mit dem Spannabschnitt (8) im Wesentlichen vollständig umgibt, wobei der Spannabschnitt (8) über mindestens einen Schlitz (9) verfügt, dessen lichte Weite im zusammengepressten Zustand des Klemmrings (4) annähernd oder ganz aufhebbar ist.

## Claims

1. Pipe clamp (1) for connecting a pipe (2), having a connection piece (3), which can be plugged into one end of the pipe (2), having a clamping ring (4), which can be compressed by a tool, and having a control element (27) for checking the pressing action, wherein the control element (27), by virtue of the clamping ring (4) being subjected to pressing action, can be displaced from a first position into a second position, in which the pressing action is indicated, and wherein the control element (27) is mounted in a moveable manner on the pipe clamp (1) and, both in the first position and in the second position, the control element is connected to the pipe clamp (1), **characterized in that** the clamping ring (4) comprises an annular portion (5) and a pressing portion (6), which can be compressed by said tool and has two compressible side walls (50), and **in that** the control element has a drive portion (52) projecting into the interspace (51) between the two side walls (50), wherein the compressing action moves the side walls (50) towards one another and results in the drive portion (52) of the control element (27) being subjected to force, in which case the control element (27) is displaced from the first position into the second position.

2. Pipe clamp (1) according to Claim 1, **characterized in that** the control element (27), in the first position, cannot, or essentially cannot, be seen from outside the pipe clamp (1), and **in that** the control element (27), in the second position, in which the pressing action is indicated, is visually perceivable or visible from outside the pipe clamp (1).

3. Pipe clamp according to either of the preceding claims, **characterized in that** the control element (27) is preferably in direct abutment against the clamping ring (4) and, under said pressing action of the clamping ring (4), can be displaced from the first position into the second position, or **in that** the control element (27), during the deformation of the clamping ring (4), comes into contact with the clamping ring (4) and can thus be displaced from the first position into the second position.

4. Pipe clamp according to one of the preceding claims, **characterized in that** the drive portion (52) of the control element (27) has at least one drive surface (53) which slopes in relation to the direction of movement of the control element (27) from the first position into the second position, wherein the at least one drive surface (53) is in contact with said side wall (50).

5. Pipe clamp according to one of the preceding claims, **characterized in that** the side walls (50) are moved towards one another in a respective direction perpendicular to the centre axis (M) of the pipe clamp (1), and **in that** the drive surfaces (53) are inclined in relation to said direction, wherein, on account of said inclination of the drive surfaces (53), the control element (27) is displaced essentially along the centre axis (M).

6. Pipe clamp (1) according to one of the preceding claims, **characterized in that** the pipe clamp (1) has a lateral surface (54), wherein the control element (27) is mounted on said lateral surface (54) and can be displaced in the direction of the connection piece (3) from said first position into said second position.

7. Pipe clamp according to one of the preceding claims, **characterized in that** the control element (27) is mounted in a guide (28) on the pipe clamp (1), wherein the control element (27) can be displaced along said guide (28) from the first position into the second position.

8. Pipe clamp according to Claim 7, **characterized in that** the guide (28) is provided by an accommodating space (30) defined by guide walls (29), wherein the guide walls (29) extend preferably from the lateral surface (54).

9. Pipe clamp according to one of the preceding claims, **characterized in that** the control element (27) comprises latching means (47), wherein the latching means (47), in the first position and/or in the second position, provide a latching connection to the pipe clamp (1).

10. Pipe clamp according to one of the preceding claims, **characterized in that** the movement of the control element (27) from the first position in a direction counter to the direction from the first position into the second position is limited by a first stop element (60), and/or **in that** the movement of the control element (27) from the second position in a direction counter to the direction from the second position into the first position is limited by a second stop element (61).

11. Pipe clamp according to one of the preceding claims, **characterized in that** the pipe clamp (1) comprises a housing (14), wherein the control element (27), in the first position, is mounted preferably entirely in the interior of the housing (14) and, during the movement into the second position, is moved out of the housing (14), or wherein the control element (27) is mounted in an accommodating space (29) forming part of the housing (14), wherein the control element (27), in the first position, is mounted preferably entirely in the interior of the accommodating space (14), and, during the movement into the second position, is moved out of the accommodating space (29).

12. Pipe clamp according to one of the preceding claims, **characterized in that** the control element (27) is a different colour from the other parts of the pipe clamp (1), in particular from the housing (14).

13. Pipe clamp according to one of the preceding claims, **characterized in that** the pipe clamp (1) also comprises a tensioning ring (7), which can be compressed by the clamping ring (4) and has a tensioning portion (8) projecting, at least in part, into the annular portion (5) and essentially completely encloses the pipe (2) by way of the tensioning portion (8), wherein the tensioning portion (8) has at least one slot (9), of which the clear opening extent can be more or less or entirely eliminated in the compressed state of the clamping ring (4).

## Revendications

1. Collier de serrage (1) pour raccorder un tube (2), comprenant une pièce de raccordement (3) pouvant être enfichée dans une extrémité du tube (2), une bague de serrage (4) qui peut être comprimée par un outil et un élément de contrôle (27) pour contrôler la compression, l'élément de contrôle (27), sous l'effet de l'opération de compression de la bague de serrage (4), pouvant être déplacé d'une première position dans une deuxième position indiquant la compression, et l'élément de contrôle (27) étant supporté de manière déplaçable sur le collier de serrage (1) et, dans la première position comme dans la deuxième position, l'élément de contrôle étant en liaison avec le collier de serrage (1), **caractérisé en ce que** la bague de serrage (4) comprend une portion annulaire (5) et une portion de pressage (6) pouvant être comprimée par ledit outil avec deux parois latérales (50) pouvant être pressées l'une contre l'autre, et **en ce que** l'élément de contrôle pénètre avec une portion d'entraînement (52) dans l'espace intermédiaire (51) entre les deux parois latérales (50), les parois latérales (50) étant déplacées l'une vers l'autre sous l'effet de la compression, et une force résultante s'appliquant sur la portion d'entraînement (52) de l'élément de contrôle (27) de telle sorte que l'élément de contrôle (27) soit déplacé de la première position dans la deuxième position.

2. Collier de serrage (1) selon la revendication 1, **caractérisé en ce que** l'élément de contrôle (27), dans la première position, n'est sensiblement pas visible ou n'est pas visible depuis l'extérieur du collier de serrage (1), et **en ce que** l'élément de contrôle (27), dans la deuxième position indiquant la compression, est perceptible visuellement ou est visible depuis l'extérieur du collier de serrage (1).

3. Collier de serrage selon l'une quelconque des revendications précédentes, **caractérisé en ce que** l'élément de contrôle (27) s'applique de préférence directement contre la bague de serrage (4) et, lors de ladite compression de la bague de serrage (4), peut être déplacé de la première position dans la deuxième position ou **en ce que** l'élément de contrôle (27), pendant la déformation de la bague de serrage (4), vient en contact avec la bague de serrage (4) et peut ainsi être déplacé de la première position dans la deuxième position.

4. Collier de serrage selon l'une quelconque des revendications précédentes, **caractérisé en ce que** la portion d'entraînement (52) de l'élément de contrôle (27) présente au moins une surface d'entraînement (53) oblique par rapport à la direction de déplacement de l'élément de contrôle (27) de la première position dans la deuxième position, l'au moins une surface d'entraînement (53) étant en contact avec ladite paroi latérale (50).

5. Collier de serrage selon l'une quelconque des revendications précédentes, **caractérisé en ce que** les parois latérales (50) sont déplacées l'une vers l'autre à chaque fois dans une direction perpendiculaire à l'axe médian (M) du collier de serrage (1), et **en ce que** les surfaces d'entraînement (53) sont orientées de manière inclinée par rapport à ladite direction, l'élément de contrôle (27), du fait de cette inclinaison des surfaces d'entraînement (53), étant essentiellement déplacé le long de l'axe médian (M).

6. Collier de serrage (1) selon l'une quelconque des revendications précédentes, **caractérisé en ce que** le collier de serrage (1) présente une surface d'enveloppe (54), l'élément de contrôle (27) étant supporté sur ladite surface d'enveloppe (54) et pouvant être déplacé dans la direction de la pièce de raccordement (3) de ladite première position dans ladite deuxième position.

7. Collier de serrage selon l'une quelconque des revendications précédentes, **caractérisé en ce que** l'élément de contrôle (27) est supporté dans un guide (28) au niveau du collier de serrage (1), l'élément de contrôle (27) pouvant être déplacé le long de ce guide (28) de la première position dans la deuxième position.

8. Collier de serrage selon la revendication 7, **caractérisé en ce que** le guide (28) est constitué par un espace de réception (30) qui est défini par des parois de guidage (29), les parois de guidage (29) s'étendant de préférence depuis la surface d'enveloppe (54).

9. Collier de serrage selon l'une quelconque des revendications précédentes, **caractérisé en ce que** l'élément de contrôle (27) comprend des moyens d'encliquetage (47), les moyens d'encliquetage (47) constituant dans la première position et/ou dans la deuxième position, avec le collier de serrage (1), une connexion par encliquetage.

10. Collier de serrage selon l'une quelconque des revendications précédentes, **caractérisé en ce que** le déplacement de l'élément de contrôle (27) de la première position dans une direction opposée à la direction de la première position dans la deuxième position est limité par un premier élément de butée (60), et/ou **en ce que** le déplacement de l'élément de contrôle (27) de la deuxième position dans une direction opposée à la direction de la deuxième position dans la première position est limité par un deuxième élément de butée (61).

11. Collier de serrage selon l'une quelconque des revendications précédentes, **caractérisé en ce que** le collier de serrage (1) comprend un boîtier (14), l'élément de contrôle (27) étant de préférence supporté complètement à l'intérieur du boîtier (14) dans la première position et, en cas de déplacement dans la deuxième position, étant ressorti du boîtier (14), ou l'élément de contrôle (27) étant supporté dans un espace de réception (29) formé dans le boîtier (14), l'élément de contrôle (27), dans la première position, étant de préférence supporté complètement à l'intérieur de l'espace de réception (14) et, lors du déplacement dans la deuxième position, étant ressorti de l'espace de réception (29).

12. Collier de serrage selon l'une quelconque des revendications précédentes, **caractérisé en ce que** l'élément de contrôle (27) se distingue par sa couleur des autres parties du collier de serrage (1), en particulier du boîtier (14).

13. Collier de serrage selon l'une quelconque des revendications précédentes, **caractérisé en ce que** le collier de serrage (1) comprend en outre une bague de tensionnement (7) pouvant être comprimée par la bague de serrage (4), laquelle bague de tensionnement pénètre avec une portion de tensionnement (8) au moins en partie dans la portion annulaire (5), et entoure le tube (2) essentiellement complètement avec la portion de tensionnement (8), la portion de tensionnement (8) disposant d'au moins une fente (9) dont la dimension interne, dans l'état comprimé de la bague de serrage (4), peut être réduite pratiquement ou complètement à zéro.
